# EUROPEAN PATENT SPECIFICATION

(11) **EP 4 543 107 B1**
(45) Date of publication and mention of the grant of the patent: **26.08.2026**
(21) Application number: 23854064.5
(22) Date of filing: 13.06.2023
(51) Int. Cl.: G01S 3/74, G01S 5/02, G01S 5/04, G01S 7/00, G01S 7/40, G01S 13/00, H04W 56/00

(54) **METHOD AND DEVICE FOR SENSING SYNCHRONIZATION, AND COMPUTER-READABLE MEDIUM**
VERFAHREN UND VORRICHTUNG ZUR ERFASSUNG DER SYNCHRONISATION UND COMPUTERLESBARES MEDIUM
PROCÉDÉ ET DISPOSITIF DE DÉTECTION DE SYNCHRONISATION, ET SUPPORT LISIBLE PAR ORDINATEUR

(30) Priority: 19.08.2022 CN 202211001337
(43) Date of publication of application: 23.04.2025
(73) Proprietor: ZTE CORPORATION, Shenzhen, Guangdong 518057 (CN)
(72) Inventor: CHEN, Shijun, Shenzhen, Guangdong 518057 (CN); LI, Junqiang, Shenzhen, Guangdong 518057 (CN); CHEN, Dawei, Shenzhen, Guangdong 518057 (CN); XIA, Shuqiang, Shenzhen, Guangdong 518057 (CN)
(74) Representative: Canzler & Bergmeier Patentanwälte Partnerschaft mbB
(86) International application number: PCT/CN2023/099855
(87) International publication number: WO 2024/037159

(56) References cited:
- CN-A- 114 430 303
- CN-A- 114 697 182
- US-A1- 2013 265 198
- US-A1- 2021 302 561
- LEE JUHYUNG; BAEK HOKI; LIM JAESUNG: "Cooperative Sensing Scheme for Acquisition of Rotational Synchronization of Radar", IEEE SYSTEMS JOURNAL, IEEE, US, vol. 14, no. 2, 1 June 2020 (2020-06-01), US , pages 3061 - 3064, XP011790973, ISSN: 1932-8184, DOI: 10.1109/JSYST.2019.2937348

## Description

### TECHNICAL FIELD

The present disclosure relates to the field of sensing technologies, and in particular, to a method for sensing synchronization, a device for sensing synchronization, and a computer-readable medium.

### BACKGROUND

During performing tasks such as cooperative sensing, two base stations are expected to be synchronized (i.e., achieve time synchronization).

However, in a complex multipath environment, it is usually difficult to determine whether a direct path (also called line of sight, LOS) exists between the two base stations, and thus it is difficult to achieve synchronization between the two base stations.

### SUMMARY

The present disclosure provides a method for sensing synchronization, a device for sensing synchronization, and a computer readable medium.

In a first aspect, embodiments of the present disclosure provide a method for sensing synchronization, including: determining sending times, receiving times and receiving angles of sensing signals; determining positions of fixed objects in a preset map as theoretical reflection positions of the sensing signals according to a position of a receiving end and the receiving angles of the sensing signals; determining distance differences of the sensing signals; the distance difference of each of the sensing signals is an absolute value of a difference between a time distance and a position distance of the sensing signal, the time distance is a distance that the sensing signal is transmitted from the sending time of the sensing signal to the receiving time of the sensing signal, and the position distance is a sum of a distance between the theoretical reflection position of the sensing signal and the receiving end and a distance between the theoretical reflection position of the sensing signal and a transmitting end; selecting at least one one-reflection-path distance difference from the distance differences; and determining a synchronization error between the transmitting end and the receiving end according to the at least one one-reflection-path distance difference.

In some implementations, the selecting at least one one-reflection-path distance difference from the distance differences includes: selecting the distance difference less than a first threshold as the at least one one-reflection-path distance difference.

In some implementations, the selecting at least one one-reflection-path distance difference from the distance differences includes: selecting the distance differences, less than a first threshold and converging to a second threshold in group, as the at least one one-reflection-path distance difference.

In some implementations, the selecting at least one one-reflection-path distance difference from the distance differences includes: selecting the distance difference being smallest as the at least one one-reflection-path distance difference.

In some implementations, the determining positions of fixed objects in a preset map as theoretical reflection positions of the sensing signals according to a position of a receiving end and the receiving angles of the sensing signals includes: determining a receiving direction of each of the sensing signals according to the receiving angle of the sensing signal; starting from the receiving end and along an opposite direction of the receiving direction, taking a position of the fixed object first encountered in the map as the theoretical reflection position of the sensing signal.

In some implementations, the determining positions of fixed objects in a preset map as theoretical reflection positions of the sensing signals according to a position of a receiving end and the receiving angles of the sensing signals includes: determining a receiving direction of each of the sensing signal according to the receiving angle of the sensing signal; starting from the receiving end and along an opposite direction of the receiving direction, taking the fixed object first encountered in the map as a candidate fixed object; and in response to that there is not any other fixed object between the candidate fixed object and the transmitting end, taking a position of the candidate fixed object as the theoretical reflection position of the sensing signal.

In some implementations, the at least one one-reflection-path distance difference includes multiple one-reflection-path distance differences; the determining a synchronization error between the transmitting end and the receiving end according to the at least one one-reflection-path distance difference includes: determining a mean value of all the one-reflection-path distance differences, and determining a quotient of the mean value divided by a light speed as the synchronization error between the transmitting end and the receiving end.

**In** some implementations, the sensing signals include at least one of: Orthogonal Frequency Division Multiplexing (OFDM) signal, or Linear Frequency Modulation (LFM) signal.

**In** some implementations, the receiving angles are calculated by a spatial spectrum estimation method using a multiple signal classification (MUSIC) algorithm.

In a second aspect, embodiments of the present disclosure provide a device for sensing synchronization, including: at least one memory, and at least one processor; the at least one memory storing a computer program to be executed by the at least one processor, the computer program, executed by the at least one processor, causes the at least one processor to implement the method for sensing synchronization provided in the present disclosure.

In a third aspect, embodiments of the present disclosure provide a computer-readable medium having a computer program stored thereon, the computer program, executed by a processor, causes the processor to implement the method for sensing synchronization provided in the present disclosure.

In the present disclosure, according to the preset map and the distance differences (differences between transmission distances calculated based on one reflection and transmission distances calculated based on time) of the sensing signals, then the one-reflection-path distance difference is selected, that is, the sensing signal (the one-reflection-path signal) actually subjected to one reflection is selected, and since the one-reflection-path distance difference is caused by a time difference (the synchronization error) between time systems of the transmitting end and the receiving end, the synchronization error between the transmitting end and the receiving end can be sensed according to the one-reflection-path distance difference; therefore, in the present disclosure, synchronization (sensing synchronization) between two ends can accurately achieved, even in the complex multipath environment, and an accurate basis can be provided for ubiquitous sensing application, for example, to achieve an accurate distance measurement.

### BRIEF DESCRIPTION OF DRAWINGS

In the accompany drawings of embodiments of the present disclosure:
Fig. 1 is a flowchart of a method for sensing synchronization according to the present disclosure;
Fig. 2 is a flowchart of a method for sensing synchronization according to the present disclosure;
Fig. 3 is a schematic diagram of transmission of a sensing signal in a method for sensing synchronization according to the present disclosure;
Fig. 4 is a schematic diagram of a process of determining a theoretical reflection position in a method for sensing synchronization according to the present disclosure;
Fig. 5 is a schematic diagram of transmission of multipath signals in a method for sensing synchronization according to the present disclosure;
Fig. 6 is a schematic diagram of a comparison between an actual transmission path of a signal and a transmission path of the signal determined based on a theoretical reflection position in a method for sensing synchronization according to the present disclosure;
Fig. 7 is a schematic diagram of transmission of signals in different paths in a method for sensing synchronization according to the present disclosure;
Fig. 8 is a schematic diagram of transmission of signals in different paths in a method for sensing synchronization according to the present disclosure;
Fig. 9 is a schematic diagram of transmission of signals in different paths in a method for sensing synchronization according to the present disclosure;
Fig. 10 shows a change of a distance difference in response to an object moving in a method for sensing synchronization according to the present disclosure;
Fig. 11 is a block diagram of a device for sensing synchronization according to the present disclosure; and
Fig. 12 is a block diagram of a computer-readable medium according to the present disclosure.

### DETAIL DESCRIPTION OF EMBODIMENTS

In order to make those skilled in the art better understand the technical solutions of the present disclosure, a method for sensing synchronization, a device for sensing synchronization, and a computer readable medium, provided in embodiments of the present disclosure, are described in detail below with reference to the accompanying drawings.

The present disclosure are described in more detail below with reference to the accompanying drawings, but the exemplary embodiments may be embodied in different forms, and the present disclosure should not be construed as limited to the embodiments set forth herein. In contrast, the embodiments are illustrated to make the present disclosure thorough and complete, and for those skilled in the art fully understanding the scope of the present disclosure.

The accompanying drawings illustrated for the embodiments of the present disclosure are used for providing further understanding to the embodiments of the present disclosure and form a part of the description, together with the exemplary embodiments of the present disclosure, are used for explaining the present disclosure, rather than limiting the present disclosure. The above and other features and advantages of the present disclosure will become more apparent to those skilled in the art by describing the exemplary embodiments in detail with reference to the accompanying drawings.

The present disclosure may be described with reference to plan and/or cross-sectional views with the help of idealized schematic illustrations of the present disclosure. Therefore, the example illustrations may be modified in accordance with manufacturing techniques and/or tolerances.

The embodiments of the present application and the technical features in the embodiments may be combined with each other if no conflict is incurred.

The terms used in the present disclosure are for a purpose of describing particular embodiments only, and are not intended to limit the present disclosure. As used in the present disclosure, a term "and/or" includes any and all combinations of at least one of listed items. As used in the present disclosure, singular forms "a" and "the" are also intended to include plural forms as well, unless the context clearly defines otherwise. Terms "includes/comprises", "made of/consisted of" used in the present disclosure specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by one of ordinary skills in the art. It should further be understood that terms, such as those defined in common dictionaries, should be construed as having a meaning that is consistent with that in the background of the existing art and the present disclosure, and should not be construed as having an idealized or over-formal meaning, unless expressly defined in the present disclosure.

The present disclosure is not limited to those embodiments shown in the accompanying drawings, but includes modifications of configurations formed based on a manufacturing process. Therefore, areas illustrated in the accompanying drawings have schematic properties, and shapes of the areas illustrated in the accompanying drawings illustrate specific shapes of the areas of elements, but are not intended to be limitation.

Ubiquitous intelligence technologies are gradually penetrating into daily life of people and all walks of life, bringing great convenience to life of people and providing significant assistance for industrial upgrading and improvement of industrial efficiency.

The ubiquitous intelligence is realized based on ubiquitous systems, and wireless communication networks can meet ubiquity, therefore, realizing ubiquitous intelligence (such as ubiquitous sensing) through the wireless communication networks becomes one of important technological routes.

Currently, ubiquitous sensing technology has been deeply studied in the field of radar, and application scenarios of the ubiquitous sensing technology mainly include sensing of aircraft in the air (such as airport radars) and short-range sensing (such as vehicle radars), and these application scenarios belong to simple scenarios. However, an implementation of ubiquitous sensing in a complex environment (such as indoor environments with numerous objects, ground environments with multiple buildings, environments with many vehicles on road, environments with a large number of people in shopping malls, etc.) is still restricted by many factors, so that the research for the ubiquitous sensing is insufficient, and there are fewer related techniques that can be actually put into practice.

For example, many existing network devices do not have a full-duplex function, and therefore, and thus only adopt a cooperative sensing mode, but cooperative sensing desires synchronization (time synchronization) between the base stations that transmit and receive sensing signals. However, in some related technologies, especially in the complex multipath environment, a situation of fixed objects is complex, and there may be moving objects such as people and vehicles, and thus it is usually difficult to determine whether there is a direct path (line of sight, LOS) between two base stations, and it is also difficult to determine which path a signal between two base stations is actually transmitted through, so that it is difficult to achieve synchronization between two base stations according to signals, and the applications of ubiquitous sensing are limited, for example, since it is difficult to achieve an accurate synchronization, an accurate distance measurement cannot be achieved.

In a first aspect, embodiments of the present disclosure provide a method for sensing synchronization.

The method for sensing synchronization provided in the present disclosure can be used for sensing a time difference between respective time systems of two devices (a transmitting end and a receiving end) and realizing synchronization (time synchronization) between the two devices, thereby ensuring that the two devices can work (e.g., perform position sensing) correctly in subsequent processes.

The transmitting end and the receiving end that the present disclosure is suitable for are wireless communication devices, i.e., devices capable of transmitting and receiving wireless communication signals.

The transmitting end and the receiving end that the present disclosure is suitable for may be devices for performing cooperative sensing (e.g., position sensing), or may be other wireless communication devices.

The method provided in the present disclosure may be performed by the receiving end, the transmitting end, or a third-party controller, or a plurality of devices may respectively perform different operations of the method, that is, any device may implement the method provided in the present disclosure, as long as the device can obtain corresponding information and perform corresponding calculations.

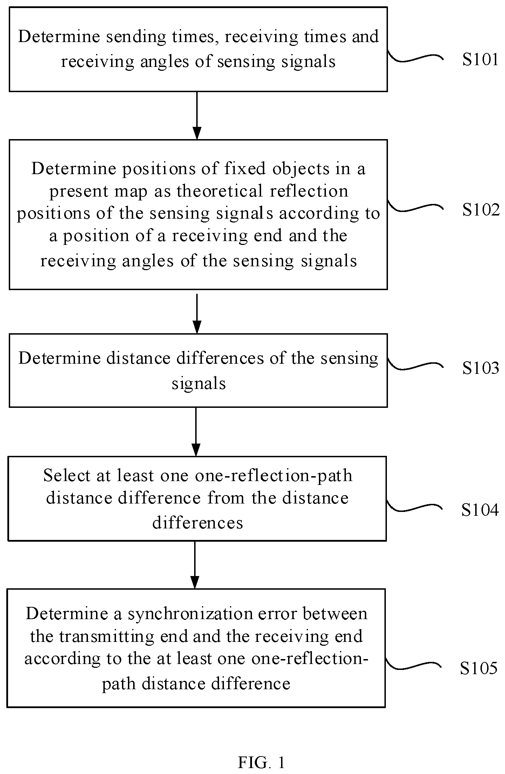

Referring to Fig. 1, the method for sensing synchronization provided in the present disclosure includes following operations S101 to S105.

At operation S101, determining sending times, receiving times and receiving angles of sensing signals.

The sensing signal may be a signal specially used for performing sensing synchronization; or may be a signal, for other sensing, transmitted between the transmitting end and the receiving end, for example, may be a signal for position sensing, so that the sensing signal can be used to simultaneously achieve position sensing and sensing synchronization.

The transmitting end sends signals (such as sensing signals) at certain angles (sending angles) at the sending times (times recorded by a time system of the transmitting end), and at least part of the signals are received by the receiving end at the receiving times (certainly, times recorded by a time system of the receiving end) at receiving angles, and the received signals are the sensing signals.

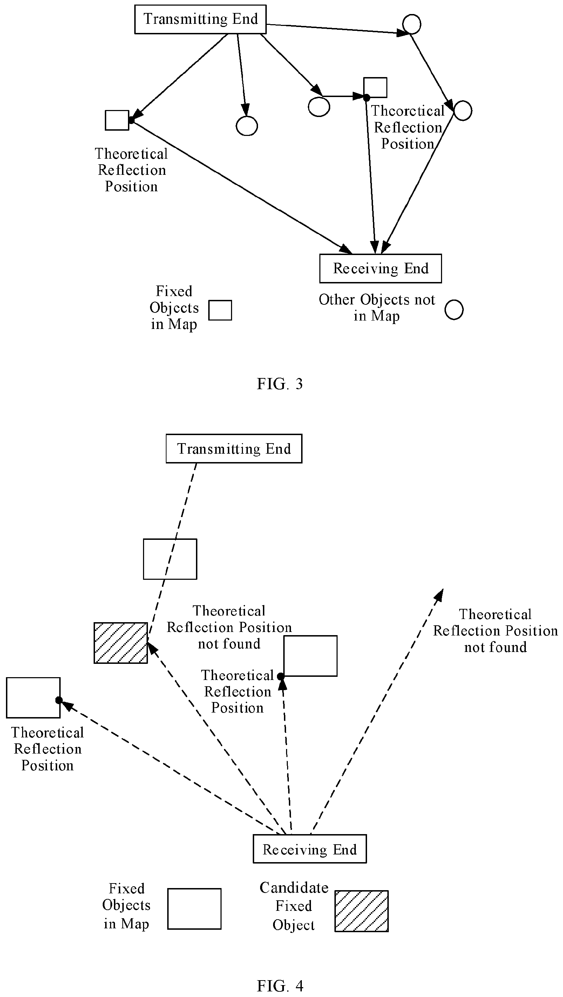

Referring to Fig. 3, since the complexity of environment, a beam sent from the transmitting end may be transmitted to the receiving end or not; and for the sensing signals transmitted to the receiving end, transmission paths of the sensing signals are also various. The sensing signals used in the present disclosure have the receiving times and the receiving angles, and thus are the sensing signals received by the receiving end.

That is, each sensing signal is a signal received at the receiving angle and at the receiving time by the receiving end after the signal being sent at the sending angle and at the sending time by the transmitting end.

The transmitting end may send a plurality of signals simultaneously, or may send a plurality of signals at different times respectively, and sending angles of the signals (i.e., angles at which the signals are sent) may be the same (in one beam direction), or may be different.

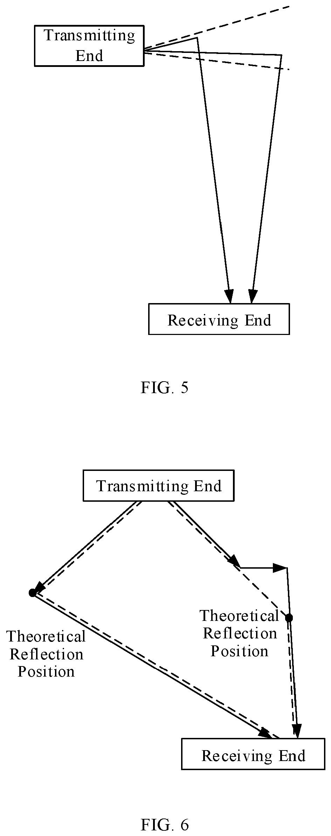

Referring to Fig. 5, since the transmitting end actually sends a "beam" with a certain width, the beam sent at the same angle and at the same time may be received by the receiving end at different angles and at different times after the beam being subject to different reflections, so that a plurality of "sensing signals" are received; the sensing signals are coherent and thus are also referred to as "multipath signals", each sensing signal corresponds to one "path" of the multipath signals, and is one "path signal".

The transmitting end and the receiving end are distinguish from each other according to their work in a current sensing synchronization process, and thus the same wireless communication device may be the transmitting end in a part of sensing synchronization processes and may be the receiving end in other sensing synchronization processes.

At operation S102, determining positions of fixed objects in a preset map as theoretical reflection positions of the sensing signals according to a position of a receiving end and the receiving angles of the sensing signals.

The environment where the transmitting end and the receiving end are located is very complex, and may include structures of buildings, objects placed in rooms, moving people and vehicles, etc., and these environmental objects may cause signals to be blocked, reflected, or the like.

Referring to Fig. 3, in the present disclosure, there is a preset map in which a plurality of fixed objects (such as buildings, fixed large-sized devices, and the like identified in the map) exist, and the fixed objects may have reflection characteristics and reflect wireless communication signals (sensing signals).

Moreover, objects that actually exist in the environment and may cause reflections on signals may be not the same as the fixed objects in the map. For example, referring to Fig. 3, other objects not present in the map may also exist in the environment, for example, moving objects (people, vehicles) or buildings may newly appear after the map is formed; as another example, a part of the fixed objects may disappear after the map is formed, e.g., a building may be removed.

Therefore, referring to Fig. 3, fixed objects in the above map and/or other objects not in the map, may cause reflections on the sensing signals. That is, different sensing signals may actually pass through different paths to reach the receiving end, for example, may directly reach the receiving end without being reflected (i.e., through a direct path), or reach the receiving end after being subjected to one reflection (i.e., through a one-reflection path), or reach the receiving end after being subjected to multiple reflections (i.e., through a multi-reflection path); moreover, how each of the sensing signals reaches the receiving end is usually unpredictable when the sensing signals are sent.

In addition, the positions of the transmitting end and the receiving end in the map are known, and thus, for each sensing signal, according to the position of the receiving end and the receiving angle of the sensing signal, an attempt can be made to find one fixed object in the map, and the sensing signal is considered to be transmitted to the receiving end at the receiving angle after being reflected by the fixed object; a position of the fixed object can be defined as the "theoretical reflection position".

At operation S103, determining distance differences of the sensing signals.

The distance difference is an absolute value of a difference between a time distance and a position distance of the sensing signal, the time distance is a distance that the sensing signal is transmitted from the sending time of the sensing signal to the receiving time of the sensing signal, and the position distance is a sum of a distance between the theoretical reflection position of the sensing signal and the receiving end and a distance between the theoretical reflection position of the sensing signal and the transmitting end.

For each sensing signal, a transmission distance (also called "pseudo range") estimated according to a transmission time is calculated, i.e., a time difference (which is a theoretical time of transmitting the sensing signal) is obtained by subtracting the sending time from the receiving time of the sensing signal, and then the time difference is multiplied by the light speed to obtain a result representing a distance (time distance) that the sensing signal can be transmitted in the time difference.

Moreover, if the sensing signal is reflected only one time at the theoretical reflection position (the position of the fixed object in the map) to reach the receiving end after the sensing signal is sent from the transmitting end, it can be known that an actual transmission distance of the sensing signal is equal to a sum of a distance from the theoretical reflection position to the transmitting end and a distance from the theoretical reflection position to the receiving end; therefore, according to the position of the transmitting end, the position of the receiving end and the theoretical reflection position of each sensing signal, the position distance of the corresponding sensing signal can be calculated.

Furthermore, for each sensing signal, the "distance difference" can be obtained by calculating an absolute value of a difference obtained by subtracting the position distance from the time distance of the sensing signal, i.e., a difference of distances of the sensing signal calculated by the two manners mentioned above.

It should be understood that, in the present disclosure, as long as the distance difference is finally obtained, a specific sequence of calculations, formulas, or the like for calculating the position distance and the time distance may be diverse.

At operation S104, selecting a one-reflection-path distance difference from the distance differences.

Referring to Fig. 5, if the sensing signal is actually subjected to one reflection at the theoretical reflection position (i.e., is a one-reflection-path signal) and no error exists between the time systems of the transmitting end and the receiving end, the position distance and the time distance of the sensing signal are the same, i.e., the distance difference is equal to 0; accordingly, if the distance difference of the one-reflection-path signal is not equal to 0, it is caused by the error between the time systems of the transmitting end and the receiving end, i.e., because a difference obtained by subtracting the sending time from the receiving time is not an actual transmission time of the sensing signal, but further includes the error between the two time systems, so that the time distance calculated subsequently is not equal to 0.

Furthermore, since the transmitting end and the receiving end are determined, all errors of time distances of the sensing signals caused by time errors are fixed, and therefore, a plurality of one-reflection-path distance differences conform to the same rule.

In contrast, referring to Fig. 6, for the sensing signal (multi-reflection-path signal) subjected to multiple reflections, an actual transmission path (solid line in Fig. 6) of the sensing signal is different from a transmission path (dotted line in Fig. 6) determined according to the theoretical reflection position, i.e., the actual transmission distance of the sensing signal is greater or less than the position distance, i.e., the time distance of the sensing signal is greater or less than the position distance, and thus the calculated distance difference conforms to another rule.

Therefore, according to characteristics of each distance difference, one or more distance differences may be selected as the one-reflection-path distance difference, that is the distance difference of the sensing signal only subjected to one reflection; certainly, the sensing signal corresponding to the one-reflection-path distance difference is a one-reflection-path signal only subjected to one reflection at the theoretical reflection position.

At operation S105, determining a synchronization error between the transmitting end and the receiving end according to the one-reflection-path distance difference.

As described above, a value of the one-reflection-path distance difference represents a deviation between the time systems of the transmitting end and the receiving end, that is, the synchronization error between the transmitting end and the receiving end.

Therefore, according to the one-reflection-path distance difference selected above, the synchronization error between the transmitting end and the receiving end can be calculated (for example, by dividing the one-reflection-path distance difference by the light speed), that is, the synchronization error between the transmitting end and the receiving end is sensed, so as to perform synchronization between the transmitting end and the receiving end according to the synchronization error.

It should be understood that any way being mathematically equivalent to the present disclosure falls within the protection scope of the present disclosure.

For example, it is feasible to divide each of the above distances and distance differences by the light speed to convert them into times and time differences, and perform the subsequent operations using the time differences.

In the present disclosure, according to the distance differences (differences between transmission distances calculated based on one reflection and transmission distances calculated based on time) of the sensing signals, the one-reflection-path distance difference is selected, i.e., actually the sensing signal (the one-reflection-path signal) subjected to one reflection is selected, and since the one-reflection-path distance difference is caused by a time difference (the synchronization error) between time systems of the transmitting end and the receiving end, the synchronization error between the transmitting end and the receiving end can be sensed according to the one-reflection-path distance difference; therefore, in the present disclosure, synchronization (sensing synchronization) between two ends can be accurately achieved in the complex multipath environment, and an accurate basis is provided for ubiquitous sensing application, for example, to realize an accurate distance measurement.

In some implementations, the selecting a one-reflection-path distance difference from the distance differences (S104) includes following operation S1041.

At operation S1041, selecting the distance difference less than a first threshold as the one-reflection-path distance difference.

By researching, it has been found that, compared with a distance difference of a multi-reflection-path signal, a distance difference of a one-reflection-path signal (i.e., the one-reflection-path distance difference) is usually relatively small, therefore, as an implementation of the present disclosure, the distance difference less than the preset first threshold may be selected as the one-reflection-path distance difference.

The first threshold is preset, and may be obtained through simulation or may be set empirically.

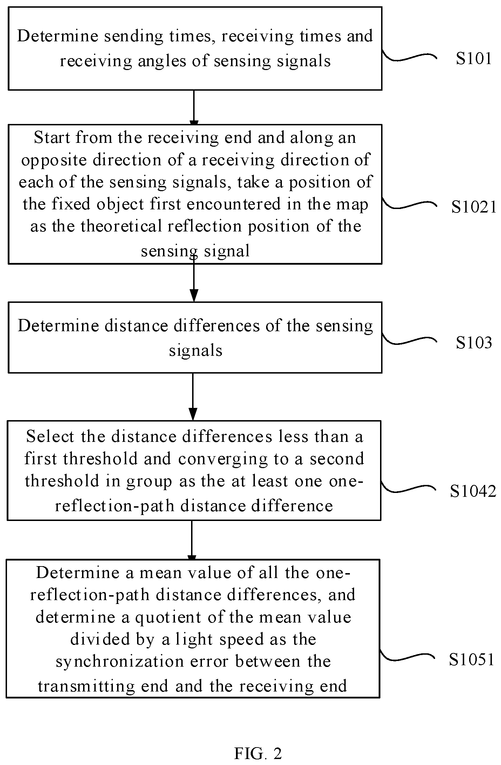

In some implementations, referring to Fig. 2, the selecting a one-reflection-path distance difference from the distance differences (S104) includes following operation S1042.

At operation S1042, selecting distance differences less than a first threshold and converging to a second threshold in group as one-reflection-path distance differences.

By researching, it has been found that, in addition to being relatively small in value, a distribution of one-reflection-path distance differences is relatively concentrated (concentrated around deviation caused by time errors) in general; therefore, as an implementation of the present disclosure, the selected one-reflection-path distance differences converge to the second threshold in group in addition to each being less than the first threshold, i.e., a difference between any two selected one-reflection-path distance differences does not exceed the second threshold.

The second threshold is also preset, and may be obtained through simulation or may be set empirically.

In some implementations, the selecting a one-reflection-path distance difference from the distance differences (S104) includes following operation S1043.

At operation S1043, selecting a smallest distance difference as the one-reflection-path distance difference.

As an implementation of the present disclosure, the distance difference with the smallest value may be directly selected as the one-reflection-path distance difference, which is relatively simple to be implemented.

In some implementations, referring to Fig. 2, the determining positions of fixed objects in a preset map as theoretical reflection positions of the sensing signals according to a position of a receiving end and the receiving angles of the sensing signals (S102) includes following operation S1021.

At operation S1021, starting from the receiving end and along an opposite direction of the receiving direction of the sensing signal, taking a position of the fixed object first encountered in the map as the theoretical reflection position of the sensing signal.

The sensing signals enter the receiving end at the receiving angles, and according to the receiving angles, the receiving directions in which the sensing signals are received by the receiving end can be determined, and thus, from the map, the last reflections of the sensing signals are performed at the positions of the fixed objects first encountered in the opposite directions (i.e., directions opposite to the receiving directions) of the receiving directions in which the receiving end receives the sensing signals, therefore, referring to Fig. 4, in the map, starting from the receiving end, moving along the opposite directions (dotted arrows in Fig. 4) of the receiving directions, the positions of the fixed objects first encountered are taken as the theoretical reflection positions (in particular, positions at intersections between the first and third dotted lines, starting from left in Fig. 4, connected to the receiving end respectively and surfaces of corresponding fixed objects).

It should be understood that, if the fixed object has a relatively large volume, the theoretical reflection position selected above is an intersection position between a line extending along the opposite direction of the receiving direction and the surface of the fixed object.

Referring to Fig. 4, for part of the sensing signals, there may be no fixed object in the opposite direction of the receiving direction in which the receiving end receives the sensing signal, which indicates that the sensing signal is not reflected by any fixed object, and thus the theoretical reflection position of the sensing signal cannot be determined (as indicated by the fourth dotted line, from the left in Fig. 4, connected to the receiving end).

In some implementations, the determining positions of fixed objects in a preset map as theoretical reflection positions of the sensing signals according to a position of a receiving end and the receiving angles of the sensing signals (S102) includes following operations S10221 and S10222.

At operation S10221, starting from the receiving end and along an opposite direction of the receiving direction, taking the fixed object first encountered in the map as a candidate fixed object.

At operation S10222, in response to that there is not any other fixed object between the candidate fixed object and the transmitting end, taking a position of the candidate fixed object as the theoretical reflection position.

As described above, the sensing signal is reflected at the fixed object first encountered in the opposite direction of the receiving direction in which the receiving end receives the sensing signal, and in the present disclosure, it is expected to select the one-reflection-path distance difference, that is, the sensing signal only subjected to one reflection at the fixed object is selected.

Referring to Fig. 4, if there is another fixed object between the candidate fixed object and the transmitting base station (i.e., transmitting end) from the map, it indicates that the corresponding sensing signal is not only reflected once at the candidate fixed object (the second dotted line, from the left in Fig. 4, connected to the receiving end); for example, the sensing signal may be transmitted to the candidate fixed object after being subjected to multiple reflections, or the last reflection that the sensing signal is subjected to may be not caused by the candidate fixed object but caused by a moving object closer to the receiving end than the candidate fixed object.

It can be seen that, for any sensing signal mentioned above (i.e., the sensing signal subjected to multiple reflections or reflected by a moving object), the candidate fixed object is not at an actual reflection position at which the sensing signal is reflected, and thus the theoretical reflection position of the sensing signal is not to be calculated, thereby reducing the subsequent amount of calculations.

It should be understood that if the theoretical reflection position of the sensing signal subjected to multiple reflections or reflected by a moving object is calculated, the corresponding distance difference is to be filtered in the subsequent operations, therefore, the present disclosure is not limited to the examples mentioned above.

In some implementations, multiple one-reflection-path distance differences are selected; referring to Fig. 2, the determining a synchronization error between the transmitting end and the receiving end according to the one-reflection-path distance difference (S105) includes following operation S1051.

At operation S1051, determining a mean value of all the one-reflection-path distance differences, and determining a quotient of the mean value divided by a light speed as the synchronization error between the transmitting end and the receiving end.

As an implementation of the present disclosure, if multiple one-reflection-path distance differences are determined, the mean value (an arithmetic average value) of the multiple one-reflection-path distance differences is calculated, and then the mean value of the one-reflection-path distance differences is divided by the light speed, so as to obtain the synchronization error between the transmitting end and the receiving end.

The above manner makes full use of data of the multiple one-reflection-path signals, and can eliminate errors caused by unexpected factors, to realize high-precision sensing synchronization.

It should be understood that the specific manner of the present disclosure is not limited thereto. For example, the synchronization error may be calculated from a median of the multiple one-reflection-path distance differences, or may be calculated directly by using only one one-reflection-path distance difference if there is only the one one-reflection-path distance difference.

In some implementations, the sensing signals include at least one of: OFDM signals, or LFM signals.

As an implementation of the present disclosure, the sensing signals include, but are not limited to, OFDM signals, LFM signals, or the like.

In some implementations, the receiving angles are calculated by a spatial spectrum estimation method using a multiple signal classification (MUSIC) algorithm.

As an implementation of the present disclosure, an algorithm for determining the receiving angle includes, but is not limited to, the MUSIC algorithm, or the like.

**In** some implementations, the transmitting end includes a base station; the receiving end includes a multi-antenna receiver.

As an implementation of the present disclosure, a form of the transmitting end includes, but is not limited to, the base station, and the like, and a form of the receiving end includes, but is not limited to, the multi-antenna receiver, and the like.

**In** some implementations, after or during the sensing synchronization being performed, other sensing processes may further be performed in the present disclosure.

For example, in the present disclosure, reflection characteristics of the corresponding fixed object may be sensed according to the theoretical reflection position of a one-reflection path, that is, how the corresponding fixed object reflects the sensing signal is to be determined.

For example, in the present disclosure, the map may be updated or whether there is any other object may be detected according to the theoretical reflection position. For a theoretical reflection position corresponding to a certain one-reflection-path distance difference, if there is any other fixed object between the theoretical reflection position and the transmitting end according to the map, the fixed object may have actually disappeared, and the map is to be updated; or, if there is no fixed object in an opposite direction of a receiving direction of a certain sensing signal, it indicates that there may be a new fixed object or a moving object appearing, and the map is to be updated or the moving object is to be detected.

In some implementations, radio resources occupied by the sensing signals in the present disclosure may include, but are limited to, time-domain and frequency-domain resources allocated in units of symbols, sub-carriers, frames, or the like.

In some implementations, the receiving end analyzes and calculates time domain impulse responses of the sensing signals received by multiple antennas, and according to a sequence of the impulse responses, determines arrival times of the sensing signals and a time period of the impulse responses distributed at the arrival times, and then acquires data of the multiple antennas according to the time period of the impulse responses at the arrival times and analyzes an arrival angle of the signal in each path.

In some implementations, the time domain impulse responses of the sensing signals include performing time-domain mathematical correlation on the received signal directly with the signal sent by the transmitting end, or transforming the received signal from time domain into frequency domain, then multiplying the data of each sub-carrier by a conjugate of frequency-domain data of the signal sent by the transmitting end, and transforming the obtained data of each sub-carrier into time domain to obtain the time-domain impulse response.

In some implementations, the time period of the impulse responses at the arrival times in multiple paths refers to a time duration formed between times of a minimum sampled point and a maximum sampled point time, with energy exceeding a third threshold, in the time domain and frequency domain responses; the third threshold value may be obtained by simulation or set empirically.

In some implementations, according to the time period of the impulse responses at the arrival times in multiple paths, data of multiple antennas is obtained, the arrival angle of the signal in each path is analyzed, and according to a time domain time that each path is at, data at the time domain time corresponding to the impulse response of each antenna is read, and then a calculation is performed to obtain the angle (i.e., receiving angle) of each path.

For example, the method for sensing synchronization provided in the present disclosure may include following operations A101 to A108.

At operation A101, a transmitting base station (transmitting end) sends a beam j at a given time Tn (sending time) on given radio resources.

The transmitting base station may be synchronous or asynchronous with a receiving base station (receiving end), and there may be a direct path (line of sight, LOS) or not between the transmitting base station and the receiving base station.

At operation A102, the receiving base station receives multipath signals, and calculates an arrival time Ti (receiving time) and a receiving angle αi of each path signal i (sensing signal).

Since part of the transmitted beam j may not reach the receiving end, i may not correspond to j.

At operation A103, a pseudo range (time distance) di=c*(Ti-Tn) of each path signal i is calculated, c is the light speed.

At operation A104, a theoretical reflection position Pi of each path signal i is calculated.

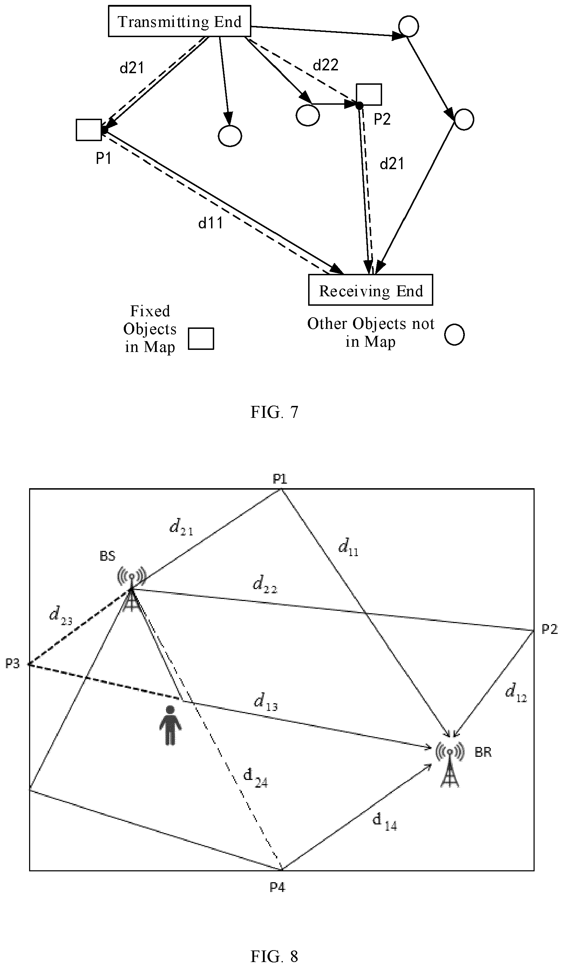

Referring to Fig. 7, starting from the receiving end, along an opposite direction of the direction at the receiving angle αi, a coordinate Pi of a position of the fixed object first encountered in a map is taken as the theoretical reflection position.

At operation A105, referring to Fig. 7, a distance d1i from Pi to the receiving base station and a distance d2i from Pi to the transmitting base station are calculated, and d1i and d2i are added to obtain a transmission distance (position distance) (d1i+d2i).

At operation A106, a distance difference Δdi between the pseudo range and the transmission distance of each path signal i is calculated, and Δdi corresponding to the multipath signals are sequenced according to magnitudes of Δdi.

That is, Δdi=|di-(d1i+d2i)|.

At operation A107, all distance differences with Δdi less than a first threshold are selected, and a group convergence is performed according to a second threshold to obtain a set A including one-reflection-path distance differences.

That is, A={i, Δdi being less than the first threshold, and a difference between any two Δdi in the set being less than the second threshold}.

It should be understood that a smallest Δdi may be selected as the one-reflection-path distance difference, i.e., A={the smallest Δdi}.

The first threshold and the second threshold are obtained by simulation.

At operation A108, a synchronization error Δt between the two base stations is calculated.

That is, $Δ t = \frac{1}{k ⋅ c} \left({\sum }_{i = 1}^{k} {d}_{i}\right)$*.*

In the above formula, k is a number of the one-reflection-path distance differences in the selected set A, and c is the light speed.

### Example 1

Referring to Fig. 8, the present disclosure provide a method for sensing synchronization, which is specially available for a case where there are both a fixed object identified in a map and another object (non-moving object) not identified in the map, and the method includes following operations B101 to B107.

At operation B101, a transmitting base station (BS) and a receiving base station (BR) are set in a room.

Fixed objects (including fixed objects in the room and walls of the room) in the room are all identified in the map.

At operation B102, the transmitting base station sends a beam at a given time Tn on given radio resources.

At operation B103, the receiving base station receives multipath signals, analyzes and calculates time domain impulse responses of the multipath signals, determines arrival times Ti in multiple paths and a time period of the impulse responses distributed at the Ti according to a sequence of the impulse responses, and then acquires a receiving angle αi (i is the number of each path signal) at which each path signal is received (i.e., a receiving angle αi of each path signal) and a pseudo range di=c*(Ti-Tn) of the path signal by using the MUSIC algorithm according to the time period corresponding to the impulse responses at the arrival times in multiple paths, c is the light speed.

At operation B104, taking the receiving base station as a starting point, extending in the map according to an opposite direction of a receiving direction (including a pitching direction) of the i^{th} path signal, until an intersection point with the fixed object in the map is found, and taking the intersection point as a theoretical reflection position, then according to a coordinate Pi of the theoretical reflection position, calculating a distance dli from Pi to the receiving base station and a distance d2i from Pi to the transmitting base station, and determining a propagation path (propagation distance) of the path signal to be (d1i+d2i).

Referring to Fig. 8, according to the walls of the room included in the map, four theoretical reflection positions P1 to P4 are calculated, and distances d11 to d14 between P1 to P4 and the receiving base station and d21 to d24 between P1 to P4 and the transmitting base station are calculated, and then corresponding propagation paths are further calculated.

It can be seen that, for the sensing signal reflected by an object (such as a stationary person in Fig. 8) other than the fixed objects, or for the sensing signal reflected multiple times, the propagation path calculated above does not coincide with the actual propagation path.

At operation B105, a distance difference Δdi=|di-(d1i+d2i)| between the propagation path and the pseudo range of each path signal is calculated, and Δdi corresponding to the multipath signals are sequenced according to magnitudes of Δdi.

At operation B106, all distance differences with Δdi less than a first threshold are selected, and a group convergence is performed according to a second threshold to obtain a set A including one-reflection-path distance differences.

That is, A={i, Δdi being less than the first threshold, and a difference between any two Δdi in the set being less than the second threshold}.

At operation B107, a synchronization error Δt between the two base stations is calculated.

That is, $Δ t = \frac{1}{k ⋅ c} \left({\sum }_{i = 1}^{k} {d}_{i}\right)$.

In the above formula, k is a number of the one-reflection-path distance differences in the selected set A, and c is the light speed.

### Example 2

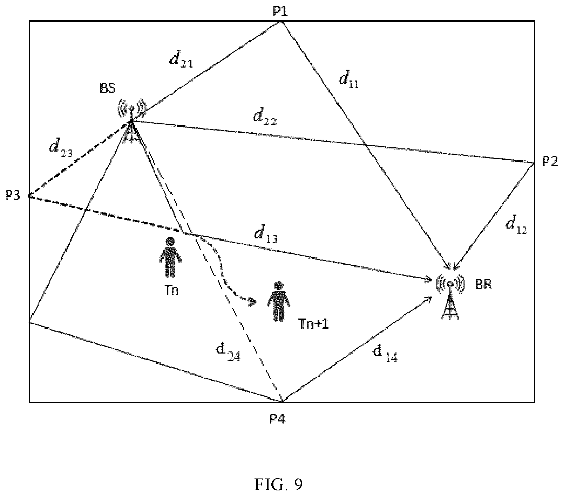

Referring to Fig. 9, the present disclosure provide a method for sensing synchronization, which is specially available for a case where there are both a fixed object identified in a map and another object (including a moving object) not identified in the map.

At operation B201, a transmitting base station (BS) and a receiving base station (BR) are set in a room.

Fixed objects (including fixed objects in the room and walls of the room) in the room are all identified in the map, and there are also people walking in the room.

At operation B202, the transmitting base station sends a beam at a given time Tn on given radio resources.

At operation B203, the receiving base station receives multipath signals, analyzes and calculates time domain impulse responses of the multipath signals, determines arrival times Ti in multiple paths and a time period of the impulse responses distributed at the Ti according to a sequence of the impulse responses, and then acquires a receiving angle αi (i is the number of each path signal) of each path signal and a pseudo range di=c*(Ti-Tn) of the path signal by using the MUSIC algorithm according to the time period corresponding to the impulse responses at the arrival times in multiple paths, c is the light speed.

At operation B204, taking the receiving base station as a starting point, extending in the map according to an opposite direction of a receiving direction (including a pitching direction) of the i^{th} path signal, until an intersection point with the fixed object in the map is found, and taking the intersection point as a theoretical reflection position, then according to a coordinate Pi of the theoretical reflection position, calculating a distance dli from Pi to the receiving base station and a distance d2i from Pi to the transmitting base station, and determining a propagation path of the path signal to be (d1i+d2i).

Referring to Fig. 9, according to the walls of the room included in the map, four theoretical reflection positions P1 to P4 are calculated, and distances d11 to d14 between P1 to P4 and the receiving base station and d21 to d24 between P1 to P4 and the transmitting base station are calculated, and then corresponding propagation paths are further calculated.

It can be seen that, for the sensing signal reflected by an object (such as moving person in Fig. 9) other than the fixed objects, or for the sensing signal reflected multiple times, the propagation path calculated above does not coincide with the actual propagation path.

At operation B205, a distance difference Δdi=|di-(d1i+d2i)| between the propagation path and the pseudo range of each path signal is calculated, and Δdi corresponding to the multipath signals are sequenced according to magnitudes of Δdi.

Referring to Fig. 9, in response to that a position of a moving object (such as a moving person in Fig. 9) changes in a time duration from a time Tn to a time Tn+1, a condition of reflection of the corresponding sensing signal may change.

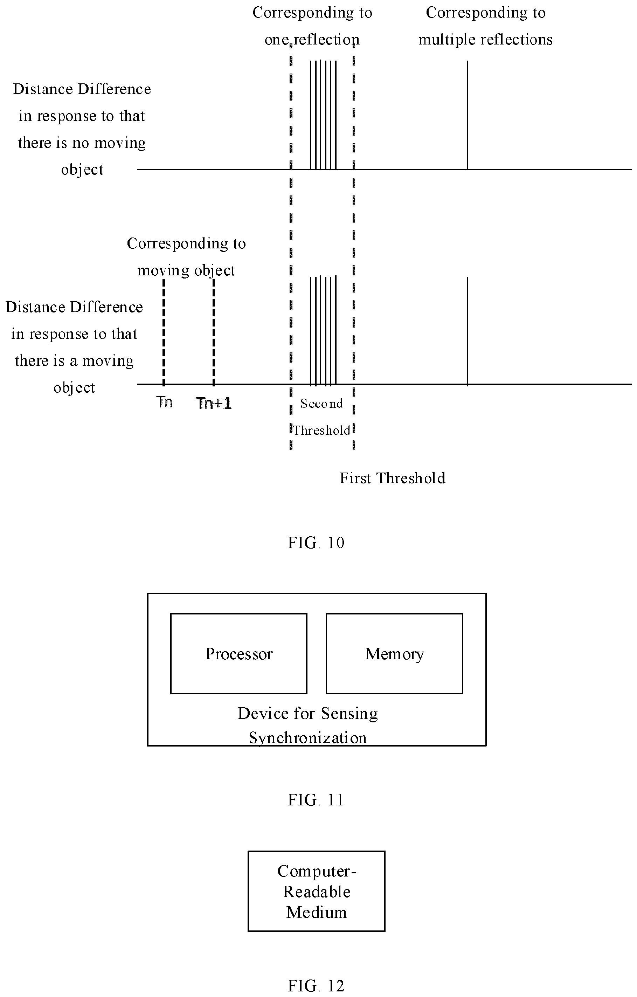

Therefore, referring to Fig. 10, a distance difference (including the receiving angle) of the corresponding sensing signal also changes. Thus, whether a moving object exists can be determined according to a change of the distance difference of the corresponding sensing signal.

At operation B206, all distance differences with Δdi less than a first threshold are selected, and a group convergence is performed according to a second threshold to obtain a set A including one-reflection-path distance differences.

That is, A={i, Δdi being less than the first threshold, and a difference between any two Δdi in the set being less than the second threshold}.

At operation B107, a synchronization error Δt between the two base stations is calculated.

That is, $Δ t = \frac{1}{k ⋅ c} \left({\sum }_{i = 1}^{k} {d}_{i}\right)$.

In the formula, k is a number of the one-reflection-path distance differences in the selected set A, and c is the light speed.

In a second aspect, referring to Fig. 11, embodiments of the present disclosure provide a device for sensing synchronization, including at least one memory, and at least one processor; the memory stores a computer program to be executed by the processor, the computer program, executed by the processor, causes the processor to implement the method for sensing synchronization provided in the present disclosure.

In a third aspect, referring to Fig. 12, embodiments of the present disclosure provide a computer-readable medium having a computer program stored thereon, the computer program, executed by a processor, causes the processor to implement the method for sensing synchronization provided in the present disclosure.

The processor is a device having a capability of processing data, includes, but is not limited to, a Central Processing Unit (CPU), and the like; the memory is a device having a capability of storing data, includes, but is not limited to, a random access memory (RAM, in particular, SDRAM, DDR, and the like), a read only memory (ROM), an electrically erasable programmable read only memory (EEPROM), and a FLASH; an I/O interface (read/write interface) may be connected between the processor and the memory, to implement information interaction between the processor and the memory, and includes, but is not limited to, a data Bus, and the like.

It should be understood by those of ordinary skill in the art that all or some of the operations in the method described above or the functional modules/components in the device or system described above may be implemented as software, firmware, hardware, or suitable combinations thereof.

In a hardware implementation, the division between the functional modules/components stated above does not correspond to the division of physical components; for example, one physical component may have a plurality of functions, or one function or operation may be performed through a cooperation of several physical components.

Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). As known to those skilled in the art, the term "computer storage medium" includes volatile/nonvolatile or removable/non-removable medium used in any method or technology for storing information (such as computer-readable instructions, data structures, program modules and other data). The computer storage medium includes, but is not limited to, a random access memory (RAM, in particular, SDRAM, DDR, and the like), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs; magnetic cassettes, magnetic tapes, magnetic disks or other magnetic storage devices; any other medium which can be used to store the desired information and can be accessed by a computer. In addition, as known to those skilled in the art, the communication medium generally includes computer-readable instructions, data structures, program modules or other data in a modulated data signal, such as a carrier wave or other transmission mechanism, and may include any information delivery medium.

The present disclosure provides the exemplary embodiments, and although specific terms are used, they are used and should only be interpreted in a generic and descriptive meaning and not for purposes of a limitation. In some examples, it is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

## Claims

1. A method for sensing synchronization, comprising:
determining sending times, receiving times and receiving angles of sensing signals (S101);
determining positions of fixed objects in a preset map as theoretical reflection positions of the sensing signals according to a position of a receiving end and the receiving angles of the sensing signals (S102);
determining distance differences of the sensing signals (S103); the distance difference of each of the sensing signals is an absolute value of a difference between a time distance and a position distance of the sensing signal, the time distance is a distance that the sensing signal is transmitted from the sending time of the sensing signal to the receiving time of the sensing signal, and the position distance is a sum of a distance between the theoretical reflection position of the sensing signal and the receiving end and a distance between the theoretical reflection position of the sensing signal and a transmitting end;
selecting at least one one-reflection-path distance difference from the distance differences (S104);
determining a synchronization error between the transmitting end and the receiving end according to the at least one one-reflection-path distance difference (S105).

2. The method of claim 1, wherein the selecting at least one one-reflection-path distance difference from the distance differences comprises:
selecting the distance difference less than a first threshold as the at least one one-reflection-path distance difference.

3. The method of claim 1, wherein the selecting at least one one-reflection-path distance difference from the distance differences (S104) comprises:
selecting the distance differences less than a first threshold and converging to a second threshold in group as the at least one one-reflection-path distance difference (S1042).

4. The method of claim 1, wherein the selecting at least one one-reflection-path distance difference from the distance differences comprises:
selecting the distance difference being smallest as the at least one one-reflection-path distance difference.

5. The method of claim 1, wherein the determining positions of fixed objects in a preset map as theoretical reflection positions of the sensing signals according to a position of a receiving end and the receiving angles of the sensing signals (S102) comprises:
determining a receiving direction of each of the sensing signals according to the receiving angle of the sensing signal;
starting from the receiving end and along an opposite direction of the receiving direction, taking a position of the fixed object first encountered in the map as the theoretical reflection position of the sensing signal (S1021).

6. The method of claim 1, wherein the determining positions of fixed objects in a preset map as theoretical reflection positions of the sensing signals according to a position of a receiving end and the receiving angles of the sensing signals (S102) comprises:
determining a receiving direction of each of the sensing signals according to the receiving angle of the sensing signal;
starting from the receiving end and along an opposite direction of the receiving direction, taking the fixed object first encountered in the map as a candidate fixed object;
in response to that there is not any other fixed object between the candidate fixed object and the transmitting end, taking a position of the candidate fixed object as the theoretical reflection position of the sensing signal.

7. The method of claim 1, wherein the at least one one-reflection-path distance difference includes multiple one-reflection-path distance differences; the determining a synchronization error between the transmitting end and the receiving end according to the at least one one-reflection-path distance difference (S105) comprises:
determining a mean value of all the one-reflection-path distance differences, and determining a quotient of the mean value divided by a light speed as the synchronization error between the transmitting end and the receiving end (S1051).

8. The method of claim 1, wherein the sensing signals comprise at least one of:
Orthogonal Frequency Division Multiplexing (OFDM) signals, or Linear Frequency Modulation (LFM) signals.

9. The method of claim 1, wherein
the receiving angles of the sensing signals are calculated by a spatial spectrum estimation method using a multiple signal classification (MUSIC) algorithm.

10. A device for sensing synchronization, comprising at least one memory, and at least one processor; the memory storing a computer program to be executed by the processor, the computer program, executed by the processor, causes the processor to implement the method for sensing synchronization according to any one of claims 1 to 9.

11. A computer-readable medium having a computer program stored thereon, the computer program, executed by a processor, causes the processor to implement the method for sensing synchronization according to any one of claims 1 to 9.

## Patentansprüche

1. Verfahren zum Abtasten von Synchronisation, umfassend:
Bestimmen von Sendezeiten, Empfangszeiten und Empfangswinkeln von Abtastsignalen (S101);
Bestimmen von Positionen von festen Objekten in einem voreingestellten Abbild als theoretische Reflexionspositionen der Abtastsignale gemäß einer Position eines Empfangsendes und den Empfangswinkeln der Abtastsignale (S102);
Bestimmen von Abstandsdifferenzen der Abtastsignale (S103); wobei die Abstandsdifferenz jedes der Abtastsignale ein Absolutwert einer Differenz zwischen einem Zeitabstand und einem Positionsabstand des Abtastsignals ist, der Zeitabstand ein Abstand ist, um den das Abtastsignal von der Sendezeit des Abtastsignals zur Empfangszeit des Abtastsignals übertragen wird, und der Positionsabstand eine Summe eines Abstands zwischen der theoretischen Reflexionsposition des Abtastsignals und dem Empfangsende und eines Abstands zwischen der theoretischen Reflexionsposition des Abtastsignals und einem Übertragungsende ist;
Auswählen mindestens einer Ein-Reflexions-Pfad-Abstandsdifferenz aus den Abstandsdifferenzen (S104);
Bestimmen eines Synchronisationsfehlers zwischen dem Übertragungsende und dem Empfangsende gemäß der mindestens einen Ein-Reflexions-Pfad-Abstandsdifferenz (S105).

2. Verfahren nach Anspruch 1, wobei das Auswählen mindestens einer Ein-Reflexions-Pfad-Abstandsdifferenz aus den Abstandsdifferenzen umfasst:
Auswählen der Abstandsdifferenz, die kleiner als ein erster Schwellenwert ist, als die mindestens eine Ein-Reflexions-Pfad-Abstandsdifferenz.

3. Verfahren nach Anspruch 1, wobei das Auswählen mindestens einer Ein-Reflexions-Pfad-Abstandsdifferenz aus den Abstandsdifferenzen (S104) umfasst:
Auswählen der Abstandsdifferenzen, die kleiner als ein erster Schwellenwert sind und zu einem zweiten Schwellenwert in der Gruppe konvergieren, als die mindestens eine Ein-Reflexions-Pfad-Abstandsdifferenz (S1042).

4. Verfahren nach Anspruch 1, wobei das Auswählen mindestens einer Ein-Reflexions-Pfad-Abstandsdifferenz aus den Abstandsdifferenzen umfasst:
Auswählen der Abstandsdifferenz, die am kleinsten ist, als die mindestens eine Ein-Reflexions-Pfad-Abstandsdifferenz.

5. Verfahren nach Anspruch 1, wobei das Bestimmen von Positionen von festen Objekten in einem voreingestellten Abbild als theoretische Reflexionspositionen der Abtastsignale gemäß einer Position eines Empfangsendes und den Empfangswinkeln der Abtastsignale (S102) umfasst:
Bestimmen einer Empfangsrichtung jedes der Abtastsignale gemäß dem Empfangswinkel des Abtastsignals;
Starten vom Empfangsende und entlang einer entgegengesetzten Richtung der Empfangsrichtung, Nehmen einer Position des festen Objekts, das zuerst im Abbild angetroffen wird, als die theoretische Reflexionsposition des Abtastsignals (S1021).

6. Verfahren nach Anspruch 1, wobei das Bestimmen von Positionen von festen Objekten in einem voreingestellten Abbild als theoretische Reflexionspositionen der Abtastsignale gemäß einer Position eines Empfangsendes und den Empfangswinkeln der Abtastsignale (S102) umfasst:
Bestimmen einer Empfangsrichtung jedes der Abtastsignale gemäß dem Empfangswinkel des Abtastsignals;
Starten vom Empfangsende und entlang einer entgegengesetzten Richtung der Empfangsrichtung, Nehmen des festen Objekts, das zuerst im Abbild angetroffen wird, als ein Kandidatenfestobjekt;
als Reaktion darauf, dass kein anderes festes Objekt zwischen dem Kandidatenfestobjekt und dem Übertragungsende vorhanden ist, Nehmen einer Position des Kandidatenfestobjekts als die theoretische Reflexionsposition des Abtastsignals.

7. Verfahren nach Anspruch 1, wobei die mindestens eine Ein-Reflexions-Pfad-Abstandsdifferenz mehrere Ein-Reflexions-Pfad-Abstandsdifferenzen einschließt; wobei das Bestimmen eines Synchronisationsfehlers zwischen dem Übertragungsende und dem Empfangsende gemäß der mindestens einen Ein-Reflexions-Pfad-Abstandsdifferenz (S105) umfasst:
Bestimmen eines Mittelwerts aller Ein-Reflexions-Pfad-Abstandsdifferenzen und Bestimmen eines Quotienten des Mittelwerts geteilt durch eine Lichtgeschwindigkeit als den Synchronisationsfehler zwischen dem Übertragungsende und dem Empfangsende (S1051).

8. Verfahren nach Anspruch 1, wobei die Abtastsignale mindestens eines umfassen von:
Orthogonal-Frequenzteilung-Multiplexing-(OFDM)-Signalen oder Linear-Frequenzmodulations-(LFM)-Signalen.

9. Verfahren nach Anspruch 1, wobei
die Empfangswinkel der Abtastsignale durch ein Raumspektrum-Schätzverfahren unter Verwenden eines Mehrfachsignalklassifikations-(MUSIC)-Algorithmus berechnet werden.

10. Vorrichtung zum Abtasten von Synchronisation, umfassend mindestens einen Speicher und mindestens einen Prozessor; wobei der Speicher ein Computerprogramm speichert, das durch den Prozessor auszuführen ist, wobei das Computerprogramm, das durch den Prozessor ausgeführt wird, den Prozessor veranlasst, das Verfahren zum Abtasten von Synchronisation nach einem der Ansprüche 1 bis 9 zu implementieren.

11. Computerlesbares Medium, auf dem ein Computerprogramm gespeichert ist, wobei das Computerprogramm, das durch einen Prozessor ausgeführt wird, den Prozessor veranlasst, das Verfahren zum Abtasten von Synchronisation nach einem der Ansprüche 1 bis 9 zu implementieren.

## Revendications

1. Procédé pour détecter une synchronisation, comprenant les étapes consistant à :
déterminer des temps de transmission, des temps de réception et des angles de réception de signaux de détection (S101) ;
déterminer des positions d'objets fixes dans une carte prédéfinie en tant que positions de réflexion théoriques des signaux de détection en fonction d'une position d'une extrémité de réception et des angles de réception des signaux de détection (S102) ;
déterminer des différences de distance des signaux de détection (S103) ; la différence de distance de chacun des signaux de détection est une valeur absolue d'une différence entre une distance de temps et une distance de position du signal de détection, la distance de temps est une distance sur laquelle le signal de détection est envoyé du temps de transmission du signal de détection au temps de réception du signal de détection, et la distance de position est une somme d'une distance entre la position de réflexion théorique du signal de détection et l'extrémité de réception et d'une distance entre la position de réflexion théorique du signal de détection et une extrémité de transmission ;
sélectionner au moins une différence de distance de trajet de réflexion unique parmi les différences de distance (S104) ;
déterminer une erreur de synchronisation entre l'extrémité de transmission et l'extrémité de réception en fonction de l'au moins une différence de distance de trajet de réflexion unique (S105).

2. Procédé selon la revendication 1, dans lequel l'étape consistant à sélectionner au moins une différence de distance de trajet de réflexion unique parmi les différences de distance comprend les étapes consistant à :
sélectionner la différence de distance inférieure à un premier seuil en tant que l'au moins une différence de distance de trajet de réflexion unique.

3. Procédé selon la revendication 1, dans lequel l'étape consistant à sélectionner au moins une différence de distance de trajet de réflexion unique parmi les différences de distance (S104) comprend les étapes consistant à :
sélectionner les différences de distance inférieures à un premier seuil et converger vers un second seuil en groupe en tant que l'au moins une différence de distance de trajet de réflexion unique (S1042).

4. Procédé selon la revendication 1, dans lequel l'étape consistant à sélectionner au moins une différence de distance de trajet de réflexion unique parmi les différences de distance comprend les étapes consistant à :
sélectionner la différence de distance la plus petite en tant que l'au moins une différence de distance de trajet de réflexion unique.

5. Procédé selon la revendication 1, dans lequel l'étape consistant à déterminer des positions d'objets fixes dans une carte prédéfinie en tant que positions de réflexion théoriques des signaux de détection en fonction d'une position d'une extrémité de réception et des angles de réception des signaux de détection (S102) comprend les étapes consistant à :
déterminer une direction de réception de chacun des signaux de détection en fonction de l'angle de réception du signal de détection ;
démarrer à partir de l'extrémité de réception et le long d'une direction opposée à la direction de réception, prendre une position de l'objet fixe rencontré en premier dans la carte en tant que position de réflexion théorique du signal de détection (S1021).

6. Procédé selon la revendication 1, dans lequel l'étape consistant à déterminer des positions d'objets fixes dans une carte prédéfinie en tant que positions de réflexion théoriques des signaux de détection en fonction d'une position d'une extrémité de réception et des angles de réception des signaux de détection (S102) comprend les étapes consistant à :
déterminer une direction de réception de chacun des signaux de détection en fonction de l'angle de réception du signal de détection ;
démarrer à partir de l'extrémité de réception et le long d'une direction opposée à la direction de réception, prendre l'objet fixe rencontré en premier dans la carte en tant qu'objet fixe candidat ;
en réponse au fait qu'il n'y a aucun autre objet fixe entre l'objet fixe candidat et l'extrémité de transmission, prendre une position de l'objet fixe candidat en tant que position de réflexion théorique du signal de détection.

7. Procédé selon la revendication 1, dans lequel l'au moins une différence de distance de trajet de réflexion unique inclut de multiples différences de distance de trajet de réflexion unique ; l'étape consistant à déterminer une erreur de synchronisation entre l'extrémité de transmission et l'extrémité de réception en fonction de l'au moins une différence de distance de trajet de réflexion unique (S105) comprend les étapes consistant à :
déterminer une valeur moyenne de toutes les différences de distance de trajet de réflexion unique, et déterminer un quotient de la valeur moyenne divisée par une vitesse de lumière en tant qu'erreur de synchronisation entre l'extrémité de transmission et l'extrémité de réception (S1051).

8. Procédé selon la revendication 1, dans lequel les signaux de détection comprennent au moins l'un parmi :
des signaux de multiplexage par répartition orthogonale de la fréquence (OFDM), ou des signaux de modulation de fréquence linéaire (LFM).

9. Procédé selon la revendication 1, dans lequel
les angles de réception des signaux de détection sont calculés par un procédé d'estimation de spectre spatial en utilisant un algorithme de classification de signaux multiples (MUSIC).

10. Dispositif pour détecter une synchronisation, comprenant au moins une mémoire, et au moins un processeur ; la mémoire stockant un programme informatique à exécuter par le processeur, le programme informatique, exécuté par le processeur, amenant le processeur à mettre en œuvre le procédé pour détecter une synchronisation selon l'une quelconque des revendications 1 à 9.

11. Moyen lisible par ordinateur sur lequel est stocké un programme informatique, le programme informatique, exécuté par un processeur, amenant le processeur à mettre en œuvre le procédé pour détecter une synchronisation selon l'une quelconque des revendications 1 à 9.
